# EUROPEAN PATENT APPLICATION

(11) **EP 4 778 891 A1**
(43) Date of publication of application: **22.07.2026**
(21) Application number: 24865190.3
(22) Date of filing: 22.08.2024
(51) Int. Cl.: C02F 1/40

(54) **SCUM REMOVAL SYSTEM IN SEWAGE TREATMENT PLANT**

(30) Priority: 14.09.2023 JP 2023149311
(71) Applicant: Utsunomiya Kogyo Co., Ltd., Koto-ku Tokyo 136-0071 (JP)
(72) Inventor: UTSUNOMIYA, Hideo, Tokyo 136-0071 (JP)
(74) Representative: Plasseraud IP
(86) International application number: PCT/JP2024/029787
(87) International publication number: WO 2025/057686

(57) **Abstract**

To improve the quality of treated water, to reduce the load on the natural environment, and to contribute to energy saving.

A first scum removal device of a conduit includes a scum peeling device including a pair of pipes that extends along a direction in which raw water flows, that includes a plurality of opening portions, and that is provided to be positioned below scum and a pressure fluid supply portion through which a pressure fluid is supplied to the pipes, and a water ejection nozzle that moves the scum toward a scum pit at a terminal end of the conduit body, a second scum removal device of a primary sedimentation basin includes a pipe skimmer, a scum guide mechanism, and a water ejection nozzle that moves the scum toward the pipe skimmer, a third scum removal device of a final sedimentation basin includes a pipe skimmer and a water ejection nozzle that moves the scum toward the pipe skimmer, and the water ejection nozzle for the final sedimentation basin moves the scum by accelerating flow of a surface of water but the scum is not destroyed by a force of water ejection and does not make water muddy since an amount of water ejection of the water ejection nozzle for the final sedimentation basin than an amount of water ejection of the water ejection nozzle for the conduit.

## Description

### Technical Field

The present invention relates to a scum removal system in a sewage treatment plant. Priority is claimed on Japanese Patent Application No. 2023-149311, filed on September 14, 2023, the content of which is incorporated herein by reference.

### Background Art

A sewage treatment plant is provided with a primary sedimentation basin which may be referred to as a first sedimentation basin and in which a settleable substance in sewage received into the sewage treatment plant is subjected to a sedimentation and separation process, a reaction tank in which treated water of the primary sedimentation basin is subjected to a biological treatment, and a final sedimentation basin which may be referred to as a second sedimentation basin, into which raw water treated in the reaction tank is received, and in which activated sludge is subjected to a sedimentation and separation process.

Both sedimentation basins are configured by arranging a large number of sedimentation basins side by side, and raw water is distributed and supplied to each sedimentation basin from one conduit (may be referred to as an "inflow conduit").

The raw water received into the sewage treatment plant contains buoyant substances in addition to settleable substances due to the characteristics of sewage. Therefore, scum, which is a collection of buoyant substances, is generated on the surface of water in the primary sedimentation basin, the final sedimentation basin, and the conduit from which raw water is distributed and supplied to the sedimentation basins. Therefore, a scum removal device is provided in these facilities.

The present applicant has previously proposed a scum removal device suitable for a primary sedimentation basin as in PTL 1 (Japanese Patent No. 3943551), and has a lot of achievements. The scum removal device according to the proposal is known as "Shuichi-kun" (registered trademark).

The scum removal device according to the proposal is configured to be provided with jetting means for jetting a fluid (air) upward in the vicinity of an opening portion of a pipe skimmer into which scum flows. Then, in a case where air is jetted from the jetting means at the time of discharge of scum, the scum is caused to be taken in and the scum flows into the pipe skimmer again and again. Once inflow of scum is started, the inflow of scum continues even in a case where the jetting of air is stopped.

The scum removal device according to the proposal has an excellent feature in which the quality of treated water can be improved in comparison with a scum removal device in the related art, the amount of water required for discharges of scum can be reduced to 1/20 to 1/30, and it is possible to contribute to energy saving.

In addition, the present applicant has proposed a scum treatment device suitable for a final sedimentation basin as in PTL 2 (Japanese Patent No. 4990856) and PTL 3 (Japanese Patent No. 5443261), and has achievements thereof. The scum removal device according to the proposal is known as "Hiichi-kun" (registered trademark).

In this scum removal device, a guide plate that extends toward an upstream side of a water stream by a predetermined length while maintaining a depth at which a distal end portion is positioned below scum generated on the surface of water when an opening portion provided at a pipe skimmer is positioned on the surface of water is provided at a lower side forming the opening portion and at a predetermined position that is closer to the upstream side of the water stream than the position of the distal end portion of the guide plate is, water is jetted toward the opening portion from a jetting nozzle when a part of the opening portion is positioned in water.

The scum removal device according to the proposal can generate a water stream, which flows toward the opening portion and of which the flow velocity is high in comparison with the vicinity thereof, on an upper surface side of the guide plate and it is possible to reliably move scum to the opening portion in a short time along with the high-flow rate water stream, without flocculation. Therefore, the scum removal device has an excellent feature in which it is possible to prevent deterioration of the quality of treated water to be discharged, it is possible to reduce the amount of water for discharge of the scum, and it is possible to achieve energy saving.

Furthermore, the present applicant has proposed a conduit (may be referred to as an "inflow conduit") including a scum removal device as in PTL 4 (Japanese Patent No. 7018552).

The conduit includes a water ejection nozzle that is provided above scum and that jets pressure water to push the scum to a scum pit side, a jetting nozzle that is provided in water positioned below the scum and that jets pressure water to push the scum to the scum pit side, and a compression air jetting mechanism that is provided at an inner wall of the conduit and that peels the scum off the inner wall by jetting compression air along the inner wall.

The conduit according to the proposal has a feature in which the pressure water is jetted from above and below the scum to push the scum to the scum pit side and the scum can be smoothly discharged to the scum pit since the scum is peeled off the inner wall of the conduit.

### Citation List

### Patent Literature

[PTL 1] JP-A-2004-202493
[PTL 2] JP-A-2010-046622
[PTL 3] JP-A-2011-240271
[PTL 4] Pamphlet of International Publication WO. 2022/123652

### Summary of Invention

### Technical Problem

As described above, the present applicant has proposed the scum removal devices suitable for each sedimentation basin or conduit and has achievements and after taking a comprehensive view of a sewage treatment plant, the present applicant has found that it is possible to achieve energy saving in a scum treatment in the entire sewage treatment plant if it is possible to efficiently remove scum generated in the entire sewage treatment plant, to improve the quality of treated water, and to minimize the amount of water for removal of the scum.

Therefore, an object of the present invention is to provide a scum treatment system in a sewage treatment plant, with which it is possible to reduce the load on the environment by improving the quality of treated water and to contribute to energy saving.

### Solution to Problem

In order to achieve the above-described object, according to the present invention, there is provided a scum removal system in a sewage treatment plant in which scum is removed from raw water that is treated via a primary sedimentation basin conduit, a primary sedimentation basin group, a reaction tank, a final sedimentation basin conduit, and a final sedimentation basin group, the system including:
first scum removal devices that are provided in the primary sedimentation basin conduit and the final sedimentation basin conduit; second scum removal devices that are respectively provided in primary sedimentation basins of the primary sedimentation basin group; and third scum removal devices that are respectively provided in final sedimentation basins of the final sedimentation basin group,
in which each of the first scum removal devices includes a scum peeling device including a pair of pipes that extends along a direction in which the raw water flows inside both side walls of a conduit body in which the raw water flows, that includes a plurality of opening portions provided at intervals in a length direction, and that is provided to be positioned below the scum and a pressure fluid supply portion through which a pressure fluid from a pressure fluid supply source is supplied to the pipes, and a water ejection nozzle for a conduit that moves the scum toward a scum pit provided at a terminal end of the conduit body,
each of the second scum removal devices includes a pipe skimmer for a primary sedimentation basin that collects the scum, a scum guide mechanism that concentrates the scum in a direction toward a center in a width direction of the primary sedimentation basin, and a water ejection nozzle for the primary sedimentation basin that moves the scum toward the pipe skimmer for the primary sedimentation basin,
each of the third scum removal devices includes a pipe skimmer for a final sedimentation basin that collects the scum, and a water ejection nozzle for the final sedimentation basin that moves the scum toward the pipe skimmer for the final sedimentation basin, and
an amount of water ejection of the water ejection nozzle for the final sedimentation basin is set to be smaller than an amount of water ejection of the water ejection nozzle for the conduit.

In each of the primary sedimentation basin conduit and the final sedimentation basin conduit, floating scum is drawn to a central side while being peeled off the side walls of the conduit body by the pressure fluid jetted from the pipes (the scum peeling device) and is pushed to flow toward the scum pit by the water ejection nozzle for the conduit. In the primary sedimentation basin and the final sedimentation basin, the scum is collected into each pipe skimmer to be discharged.

Regarding such a series of treatments, in the primary sedimentation basin, thick solidified scum is pushed to flow toward the pipe skimmer by a force of water ejected from the water ejection nozzle for the primary sedimentation basin. In the final sedimentation basin, since the amount of scum is small and the flow velocity thereof is low, a surface layer is accelerated by ejection of water from the water ejection nozzle for the final sedimentation basin and the scum on the surface of water is sent to the pipe skimmer.

In this case, since the amount of water ejection from the water ejection nozzle for the final sedimentation basin is set to be small, it is possible to reliably send scum of which the amount is small and that floats on the surface of water to the pipe skimmer in a state of floating on the surface of water while preventing the scum from making the water muddy or being dissolved into the water while being scattered by a force of water ejection.

In this manner, it is possible to smoothly and reliably remove the scum in accordance with the state of treatment of the scum over an area from the primary sedimentation basin to the final sedimentation basin and to improve the quality of treated water. Although the treated water is released into the natural environment, the load on the environment is reduced since the water quality of the treated water is improved. In addition, since the amount of water flowing into the pipe skimmer along with scum is small and it is possible to perform scum removal in a short time, the amount of water returned to an upstream side from the pipe skimmer is reduced and as a result, the amount of electricity for returning the water can be reduced and energy saving can be achieved.

In the scum removal system in a sewage treatment plant according to the present invention, the pipe skimmer for the final sedimentation basin may include a scum guide plate that is disposed below a surface of water ahead of an opening into which the scum is to be received and that guides the scum while causing the scum to flow.

The scum is guided to the opening of the pipe skimmer while flowing on the scum guide plate immediately ahead of the opening of the pipe skimmer. In order to remove the scum of which the amount is small, the raw water is caused to flow into the opening such that the scum guide plate lightly scoops up a surface layer of the raw water. In addition, since the scum guide plate is disposed near the surface of water, the scum can be reliably guided to the pipe skimmer without being influenced by an upward stream or the like from a lower side. Accordingly, the scum can be reliably removed.

In the scum removal system in a sewage treatment plant according to the present invention, the scum guide mechanism may include a front wall plate that is disposed below an opening of the pipe skimmer for the primary sedimentation basin into which the scum is to be received, a pair of guide plates that is disposed such that an interval between the guide plates increases from both end portions of the front wall plate toward an upstream side from which the raw water flows, and a fluid jetting pipe that jets a pressure fluid that rises from lower end portions of the front wall plate and the guide plates along surfaces of the front wall plate and the guide plates that are on a side from which the raw water flows may be provided near the front wall plate and the guide plates.

It is possible to guide scum flowing through the sedimentation basin to a scum intake opening while concentrating the scum to a central portion with the pair of guide plates. In such a case, it is possible to guide the scum in a state of being separated from the guide plates while preventing the scum from adhering to the guide plates by means of a pressure fluid jetted from the fluid jetting pipe provided near the guide plates.

In addition, since a pressure fluid is jetted from the fluid jetting pipe provided near the front wall plate, the scum can be guided to the scum intake opening while being lifted from the lower side. Therefore, the amount of the remainder of the scum can be reduced and the scum can be smoothly and reliably taken into the scum intake opening.

The pressure fluid may be compression air. The scum can be effectively separated from a wall surface because of a bubbling phenomenon, and the scum can be effectively guided to the opening (the scum intake port) by generating a buoyant force for the scum.

In the scum removal system in a sewage treatment plant according to the present invention, the pipe skimmer for the final sedimentation basin may include a pipe material that is disposed along a width direction of the final sedimentation basin, and a rotational movement mechanism that rotationally moves the pipe material around an axis, the pipe material may include an upstream-side scum intake port formed on an upstream side and a downstream-side scum intake port formed on a downstream side, the intake ports being formed at an interval in a circumferential direction, and the rotational movement mechanism may rotationally move the pipe material in one direction so that the upstream-side scum intake port is disposed on a surface of water and rotationally move the pipe material in a direction opposite to the one direction so that the downstream-side scum intake port is disposed on the surface of water.

Accordingly, scum flowing from the upstream side is taken in through the upstream-side scum intake port. In a case where there is scum that flows to the downstream side without entering the upstream-side scum intake port or there is scum that floats on the downstream side, the pipe skimmer is reversed so that the scum on the downstream side can be removed through the downstream-side scum intake port.

In the scum removal system in a sewage treatment plant according to the present invention, a plurality of the pressure fluid supply portions may be provided and be respectively connected to a plurality of portions of the pipes.

Since the pressure fluid is supplied to the plurality of portions of the pipes, the pressure fluid can be uniformly supplied to the pipes which are long. Advantageous Effects of Invention

In the scum removal system in a sewage treatment plant according to the present invention, scum removal can be efficiently performed by the first to third scum removal devices that are incorporated into the primary sedimentation basin conduit, the primary sedimentation basin group, the final sedimentation basin conduit, and the final sedimentation basin group in accordance with the respective situations thereof and the quality of treated water can be improved. Therefore, it is possible to reduce a load on the environment in a case where the treated water is released into the natural environment. In addition, since the amount of water flowing into a pipe skimmer along with scum is small and it is possible to perform scum removal in a short time, the amount of water returned to an upstream side from the pipe skimmer is reduced and as a result, the amount of electricity for returning the water can be reduced, energy saving can be achieved, and the cost of scum treatment in a sewage treatment plant can be reduced. Brief Description of Drawings

Fig. 1 is a plan view showing a schematic configuration of the entire sewage treatment plant to which a scum removal system according to an embodiment of the present invention is applied.
Fig. 2 is a plan view partially showing a primary sedimentation basin conduit and primary sedimentation basins in a state of being connected to the conduit.
Fig. 3 is a cross-sectional view taken along line X1-X1 of Fig. 2 and shows a state where a movable gate is closed.
Fig. 4 is a cross-sectional view taken along line X1-X1 of Fig. 2 and shows a state where the movable gate is open. A pressure fluid supply portion is not shown.
Fig. 5 is an enlarged plan view showing a main part of a scum peeling device incorporated into the primary sedimentation basin conduit of Fig. 2.
Fig. 6 is an enlarged view along line X2-X2 of Fig. 5 which partially shows a pipe and discharge port members.
Fig. 7 is a plan view partially showing a primary sedimentation basin including a second scum removal device.
Fig. 8 is a cross-sectional view taken along line X3-X3 of Fig. 7.
Fig. 9 is an enlarged view of the vicinity of a pipe skimmer in Fig. 8.
Fig. 10A is a cross-sectional view of a water ejection nozzle, and Fig. 10B is a plan view of the water ejection nozzle.
Fig. 11 is a plan view showing a third scum removal device in a final sedimentation basin.
Fig. 12 is a schematic view showing a rotational movement mechanism of a pipe skimmer of Fig. 11.
Fig. 13A is a cross-sectional view showing how the posture of the pipe skimmer is when scum is not taken in, Fig. 13B is a cross-sectional view showing how the posture of the pipe skimmer is when scum on an upstream side is taken in, and Fig. 13C is a cross-sectional view showing how the posture of the pipe skimmer is when scum on a downstream side is taken in.
Fig. 14 is a cross-sectional view of a water ejection nozzle provided in the final sedimentation basin. Description of Embodiments

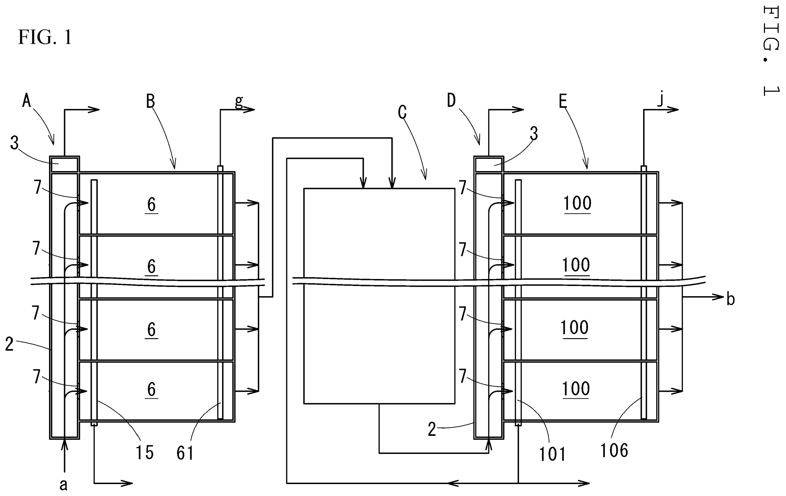

Hereinafter, an embodiment of the present invention will be described. Fig. 1 is a plan view showing a schematic configuration of the entire sewage treatment plant to which a scum removal system according to the embodiment of the present invention is applied, and the schematic configuration is shown along the flow of water, from inflow of raw water (hereinafter, may be simply referred to as "raw water") represented by an arrow a on a left lower side of the drawing to outflow of treated water represented by an arrow b on a right central side of the drawing, the raw water being sewage.

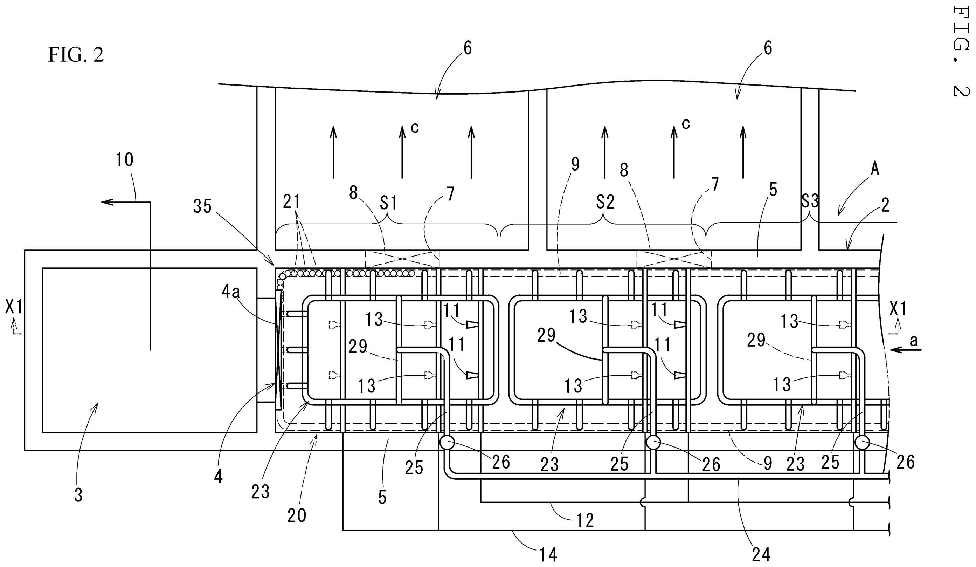

In this sewage treatment plant as well, as in a well-known sewage treatment plant, treatment facilities are provided over an area from an upstream side to a downstream side of flow of the raw water (sewage), the treatment facilities being a primary sedimentation basin conduit A, a primary sedimentation basin group B, a reaction tank C, a final sedimentation basin conduit D, and a final sedimentation basin group E. Of these facilities, each of the facilities A, B, D, and E excluding the reaction tank C is provided with a scum removal device. Hereinafter, the description will be made for each facility with reference to Fig. 2 and the subsequent drawings.

### (Primary Sedimentation Basin Conduit A)

The primary sedimentation basin conduit A (may be referred to as an inflow conduit (hereinafter, may be simply referred to as a conduit A)) is configured to include a conduit body 2 and a scum pit 3 that is in a state of being connected to the conduit body 2. The conduit body 2 provides a long water channel that is open on an upper side and the conduit body 2 is configured such that raw water which is sewage is supplied from one end side (a right end side in an example shown in Fig. 2) in a longitudinal direction of the long water channel (refer to the arrow a).

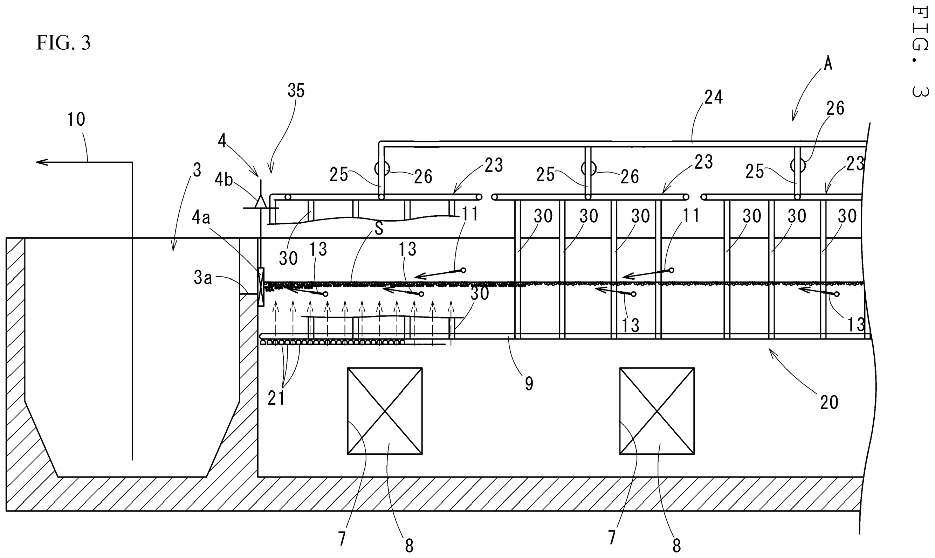

The scum pit 3 is provided on a terminal end side (a left end side in the example shown in Fig. 2) of the conduit body 2 in a direction in which the raw water flows a part of walls forming the scum pit 3 also serves as a wall forming the terminal end side of the conduit body 2. The height of an upper wall surface 3a of the wall serving as the wall forming the scum pit and the wall forming the terminal end side is determined such that the upper wall surface 3a is positioned slightly below the surface of water in the conduit body 2 (refer to Fig. 3).

In addition, a movable gate 4 is provided on the conduit body 2 side of the wall provided with the upper wall surface 3a and the movable gate 4 is configured such that inflow of raw water from the conduit body 2 to the scum pit 3 can be controlled.

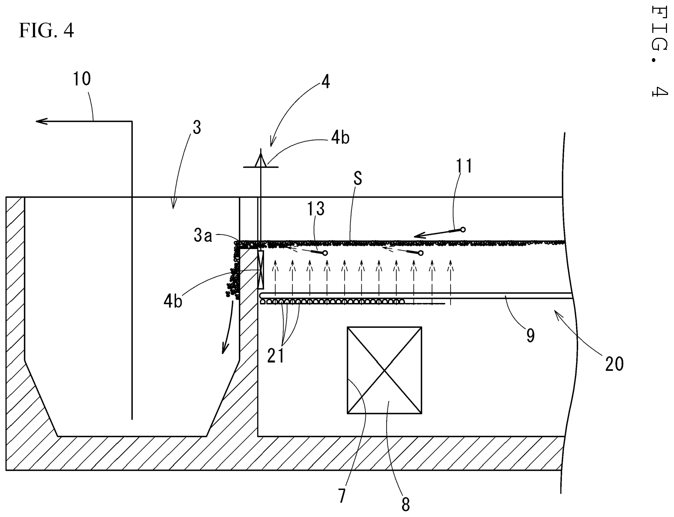

The movable gate 4 is configured to include a gate plate 4a and a driving mechanism 4b, and is configured such that the movable gate 4 is closed as shown in Fig. 3 when scum S is not to be discharged into the scum pit 3 from the conduit body 2 and the movable gate 4 is opened as shown in Fig. 4 when the scum S is to be discharged into the scum pit 3 from the conduit body 2.

Therefore, when the movable gate 4 is open as shown in Fig. 4, surface water of the conduit body 2 (that is, raw water containing the scum S) can be discharged into the scum pit 3.

The width of the gate plate 4a is set to be slightly smaller than the water channel width of the conduit body 2 and the height of the gate plate 4a is set to be sufficiently larger than a difference between the position of the upper wall surface 3a and the position of the surface of water in the conduit body 2. The driving mechanism 4b is configured to be able to move the gate plate 4a upward and downward, and a well-known upward and downward moving mechanism such as a type of moving mechanism consisting of a screw rod and a rotary nut, a rack and pinion type moving mechanism, or a hydraulic cylinder is adopted as the driving mechanism 4b.

When the scum S is not to be discharged, the driving mechanism 4b blocks a space between the scum pit 3 and the conduit body 2 by raising the gate plate 4a such that the position of an upper end of the gate plate 4a is sufficiently higher than the position of the surface of water in the conduit body 2 as shown in Fig. 3.

In addition, when the scum S is to be discharged, the driving mechanism 4b can make the scum pit 3 and the conduit body 2 communicate with each other by lowering the gate plate 4a such that the position of the upper end of the gate plate 4a is lower than the position of the surface of water in the conduit body 2 and slightly lower than the position of a bottom surface of a scum layer S generated in the conduit body 2 as shown in Fig. 4.

The scum pit 3 is provided with a scum discharge device 10 for discharge of accumulated scum from the scum pit 3.

A plurality of primary sedimentation basins 6 that correspond to the primary sedimentation basin group B of the sewage treatment plant are provided in parallel outside one (a side wall on an upper side in Fig. 2) of a pair of side walls 5 extending in the longitudinal direction of the long water channel forming the conduit body 2.

A part of peripheral walls of the primary sedimentation basins 6 also serves as the side wall 5 of the conduit body 2. In addition, inflow ports 7 respectively communicating with the primary sedimentation basins 6 and opening and closing gates 8 are provided at intermediate positions of the depth of the side wall 5. Therefore, the inside of the conduit body 2 and the insides of the primary sedimentation basins 6 communicate with each other through the inflow ports 7. Therefore, when the opening and closing gates 8 of the inflow ports 7 are open, raw water in the conduit body 2 flows into the primary sedimentation basins 6 and the raw water flowing into the primary sedimentation basins 6 can flow in the primary sedimentation basins 6 in a direction (refer to arrows c in Fig. 2) away from the side wall 5.

Note that in the example shown in Fig. 2, the primary sedimentation basins 6 are installed in parallel outside the one of the side walls 5 of the conduit body 2. However, the primary sedimentation basins 6 may be installed in parallel outside both of the side walls 5.

### (Scum Peeling Device 20)

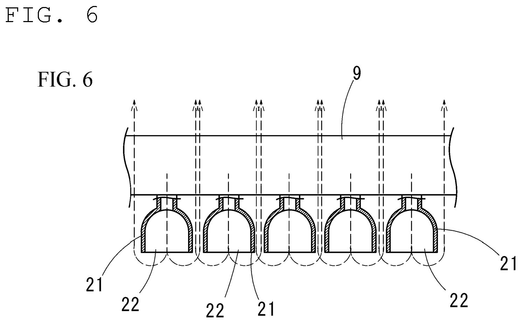

Since the scum S contained in raw water flowing through the conduit body 2 adheres to the side walls 5 and 5 of the conduit body 2, a scum peeling device 20 that peels the scum S off the side walls 5 and 5 is provided. Inside both of the side walls 5 of the conduit body 2, a pair of pipes 9 and 9 constituting a part of the scum peeling device 20 is provided to be parallel with each side wall 5 and to extend along the direction in which raw water flows. The pipes 9 and 9 are made of a well-known pipe material such as steel or synthetic resin, and a large number of discharge port members 21 are provided in a row at predetermined intervals in a length direction of the pipes 9 and 9 as shown in Fig. 6.

Each of the discharge port members 21 is made of a synthetic resin such as fluororesin, and the outer shape thereof is a cup-like shape (a bowl-like shape, a hangingbell-like shape, or the like) with an opening portion 22 provided at a lower portion thereof. The discharge port members 21 are fixed to the pipes 9 in a state where the inner spaces thereof communicate with the insides of the pipes 9, and the opening portions 22 are disposed to face a vertically lower side.

The pipes 9 are installed to be positioned below the scum layer S generated in the conduit body 2. For example, in a case where the scum S is supposed to be discharged into the scum pit 3 from the conduit body 2 after the scum S is retained due to the operation of the conduit A and grows to have a thickness of, for example, nearly 10 cm, the pipes 9 are installed to be slightly lower than positions that are 10 cm lower than the surface of water. Although the installation positions of the pipes 9 differ depending on in which sewage treatment plant the conduit body 2 is installed, the installation positions are determined to be below the scum S generated.

The scum peeling device 20 includes the pipes 9 described above and pressure fluid supply portions 23 for supply of compression air, pressure water, or gas-liquid mixed pressure water to the pipes 9. Here, compression air will be used as an example of a pressure fluid.

Although the pipes 9 are provided along a length direction of the conduit body 2 (along the direction in which raw water flows), the conduit body 2 is divided into a plurality of regions S1 to S3 each having a predetermined length along the length direction thereof and the pressure fluid supply portion 23 is provided for each of the regions S1 to S3 into which the conduit body 2 is divided. Therefore, a plurality of the pressure fluid supply portions 23 are provided in one conduit body 2.

### (Pressure Fluid Supply Portion 23)

In the example shown in Fig. 2, the conduit body 2 is divided into the three regions S1 to S3. Therefore, three pressure fluid supply portions 23 are provided (however, the pressure fluid supply portions 23 are not shown in Fig. 4). A pressure fluid pipe 24 through which a pressure fluid is supplied from a pressure supply source is connected to each of the pressure fluid supply portions 23. The pressure fluid pipe 24 is provided with branch pipes 25 through which pressure fluids are respectively supplied to the pressure fluid supply portions 23. The branch pipes 25 are respectively provided with flow rate adjustment valves 26 for the controlling of flow rates to the respective pressure fluid supply portions 23.

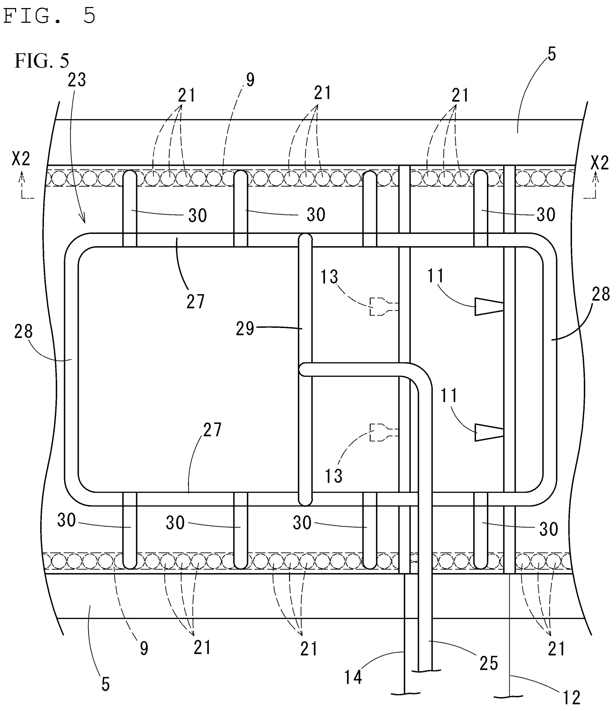

As shown in Fig. 5, each of the pressure fluid supply portions 23 is configured such that a pair of long pipe portions 27 and 27, which is provided to be disposed to be parallel with each of the pair of pipes 9 and 9, and a pair of short pipe portions 28 and 28, which is provided to connect both end portions of the long pipe portions 27 and 27 to each other, form one loop-like shape as seen in a plan view.

A central connection pipe 29 that connects both long pipe portions 27 and 27 to each other is connected to each of approximately central positions of the long pipe portions 27 and 27. In addition, each of the branch pipes 25 of the pressure fluid supply portions 23 is connected to a central position of the central connection pipe 29 in a length direction.

The long pipe portions 27 and 27 of the pressure fluid supply portion 23 are provided with a plurality of connection pipes 30 that connect the long pipe portions 27 and 27 and the pipes 9 and 9 to each other respectively and that are provided at predetermined intervals. Therefore, a pressure fluid from a pressure fluid supply source is supplied to each pressure fluid supply portion 23 from the pressure fluid pipe 24 via each branch pipe 25, and is supplied to the pipes 9 from each pressure fluid supply portion 23 via each connection pipe 30.

Each pressure fluid supply portion 23 is provided at a position above the surface of water in the conduit body 2 together with the pressure fluid pipe 24 and the branch pipes 25. Although the pressure fluid supply portions 23 can be disposed in water, it is preferable that the pressure fluid supply portions 23 are disposed above the surface of water since the pressure fluid supply portions 23 hinder raw water from flowing. The pipes 9 and the like are represented by broken lines in Fig. 2 and the like and the broken lines indicate that the pipes 9 and the like are provided in water.

In a case where a pressure fluid (compression air) is supplied from each pressure fluid supply portion 23 into the pipes 9 and 9 in the scum peeling device 20 configured as described above, the pressure fluid is released into raw water as air bubbles through the respective opening portions 22 of the discharge port members 21, the opening portions 22 facing the lower side (refer to Fig. 6). Then, the released air bubbles rise along inner surfaces of the side walls 5, and scum adhering to the side walls 5 can be peeled off.

Note that instead of the pipes 9 and the discharge port members 21, a pipe made of an elastic material such as natural rubber or synthetic rubber, in which a large number of slits (elongated opening portions) are provided at intervals in a length direction, or a steel pipe in which a large number of holes (opening portions) are provided at intervals in a length direction can also be adopted.

### (Water Ejection Nozzles 11 for Conduit)

In the conduit body 2, a plurality of water ejection nozzles (hereinafter, above-water nozzles) 11 for a conduit are provided above water. The above-water nozzles 11 are provided slightly above the surface of water in the conduit body 2, are provided at a plurality of positions to divide a length in a direction in which water in the conduit body 2 flows at predetermined intervals, and are provided such that a plurality of the above-water nozzles 11 are provided at each position in a width direction of the conduit body 2 (refer to Fig. 2).

Water having a predetermined pressure is supplied to each of the above-water nozzles 11 via pressure water supply pipes 12. Note that treated water of the sewage treatment plant can be used as the water supplied to the above-water nozzles 11.

Each above-water nozzle 11 is provided obliquely such that a tip end opening thereof is on a downstream side of flow of water in the conduit body 2 and faces the lower side. Therefore, in a case where pressure water is ejected from each of the above-water nozzles 11, jetted water is supplied toward the downstream side with respect to the scum S formed in a layer-like shape on the surface of water in the conduit body 2 and thus the scum S that is about to flow toward the scum pit 3 is prompted to flow (refer to Figs. 3 and 4).

Here, for the sake of convenience of description, the scum S that has grown in a layer-like shape having a certain thickness on the surface of water may be referred to as the "scum layer S".

### (Water Ejection Nozzles 13 for Conduit)

In addition, in the conduit body 2, a plurality of water ejection nozzles (hereinafter, in-water nozzles) 13 for a conduit are provided in water.

A plurality of the in-water nozzles 13 are provided in water at positions slightly lower than the surface of water in the conduit body 2 and are provided at predetermined intervals in the direction in which water in the conduit body 2 flows. In addition, a plurality of (two in the example shown in Fig. 2) the in-water nozzles 13 are provided at predetermined intervals with respect to a direction orthogonal to the direction in which water in the conduit body 2 flows (that is, with respect to the water channel width) as well. However, the in-water nozzles 13 may not be provided.

Water having a predetermined pressure is supplied to each of the in-water nozzles 13 via pressure water supply pipes 14. In addition, in a case where pressure water is supplied to the in-water nozzles 13 from the pressure water supply pipes 14, the in-water nozzles 13 jet the pressure water through openings that face the scum pit 3 side, and thus the scum S that is about to flow toward the scum pit 3 can be prompted to flow (refer to Fig. 4). Treated water of the sewage treatment plant can be used as the water supplied to the in-water nozzles 13.

In the following description, the water ejection nozzles 11 installed above water will be referred to as above-water nozzles and the water ejection nozzles 13 installed in water will be referred to as in-water nozzles.

In the primary sedimentation basin conduit A described above, a first scum removal device 35 is composed of the scum pit 3 including the movable gate 4, the scum peeling device 20, the above-water nozzles 11, the in-water nozzles 13, and the like (Figs. 2 and 3).

A sewage treatment method including a scum discharging operation in the conduit A having the above-described configuration will be described.

In a case where raw water (sewage) is supplied to the conduit body 2 and the supplied raw water is distributed and supplied to the primary sedimentation basins 6 via the inflow ports 7 respectively, a sedimentation and separation process is performed in each of the primary sedimentation basins 6. At this time, the scum S is gradually generated on the surface of water in the conduit body 2. Figs. 3 and 4 show such a state.

When the generation of the scum layer S in the conduit body 2 progresses to some extent and the thickness of the scum layer S reaches a predetermined thickness (for example, 10 cm), pressure water is supplied to the in-water nozzles 13 and the above-water nozzles 11 and advances toward the downstream side while destroying a part of the scum layer S. Furthermore, compression air is supplied to the pipes 9. Accordingly, an operation of discharging the scum S to the scum pit 3 is started.

In a case where the pressure water is supplied to the in-water nozzles 13, the pressure water is jetted from the in-water nozzles 13 so that the scum S flows to the scum pit 3 side. Since distal end sides of the in-water nozzles 13 are formed to face a slightly upper side, the pressure water acts such that the scum S is slightly lifted in water and the scum S is moved. At the same time, the pressure water is jetted from the above-water nozzles 11 as well so that the scum S flows to the scum pit 3 side.

In a case where the operation of discharging the scum S to the scum pit 3 is started, compression air is jetted from the pipes 9 as well and the scum S adhering to the side walls 5 is peeled off by the compression air. Therefore, the scum S is smoothly and quickly discharged to the scum pit 3. Figs. 3 and 4 show such a state.

A way in which compression air is jetted from the pipes 9 will be further described.

Compression air is supplied to the pipes 9 and 9 via the connection pipes 30 from each pressure fluid supply portion 23. Since each of the pressure fluid supply portions 23 is formed in a loop-like shape, the internal pressures of the pressure fluid supply portions 23 are maintained to be substantially uniform. Therefore, compression air of a substantially uniform pressure can be supplied to the pipes 9 corresponding to each pressure fluid supply portion 23 and thus substantially uniform compression air is jetted from the opening portions 22 of all of the discharge port members 21. Therefore, the scum S adhering to the side walls 5 respectively corresponding to the long pipe portions 27 of the pressure fluid supply portions 23 can be effectively peeled off.

Moreover, the amounts of compression air respectively supplied to the pressure fluid supply portions 23 from the pressure fluid pipe 24 through the branch pipes 25 can be adjusted by the flow rate adjustment valves 26, respectively. Therefore, it is possible to more powerfully peel the scum S present at a position in the conduit body 2 at which the scum S is likely to be retained and an adhering force is great, (for example, a terminal end side of flow in the conduit body 2) by increasing the amount of compression air supplied to one of the plurality of pressure fluid supply portions 23 that is provided at such a position.

Therefore, it is possible to appropriately supply pressure fluids in accordance with the state of adhesion of scum or the like and to effectively peel the scum off while controlling the flow rates of the pressure fluids respectively supplied to the pressure fluid supply portions 23 by using the flow rate adjustment valves 26.

Although the plurality of pressure fluid supply portions 23 are provided in a state of being separated from each other, the pressure fluid supply portions 23 may be in a state of being connected to each other.

When most of the scum S is discharged from the conduit body 2 to the scum pit 3, supply of pressure water to the in-water nozzles 13 and the above-water nozzles 11 is stopped and supply of compression air to the pipes 9 is stopped. Accordingly, the operation of discharging the scum S to the scum pit 3 ends.

Note that although the in-water nozzles 13 and the above-water nozzles 11 are used in the operation of discharging the scum S to the scum pit 3 in the above description, any one of the in-water nozzles 13 and the above-water nozzles 11 may be used in the operation of discharging the scum S to the scum pit 3. Whether to use any one or both of the nozzles is determined by the properties, the amount, and the like of the scum S generated.

(Primary Sedimentation Basin Group B) The primary sedimentation basin group B is configured such that the plurality of primary sedimentation basins 6 are installed in parallel as shown in Figs. 1 and 2 and sewage received into the sewage treatment plant is received into the primary sedimentation basin group B (each primary sedimentation basin 6) via the primary sedimentation basin conduit A as described above.

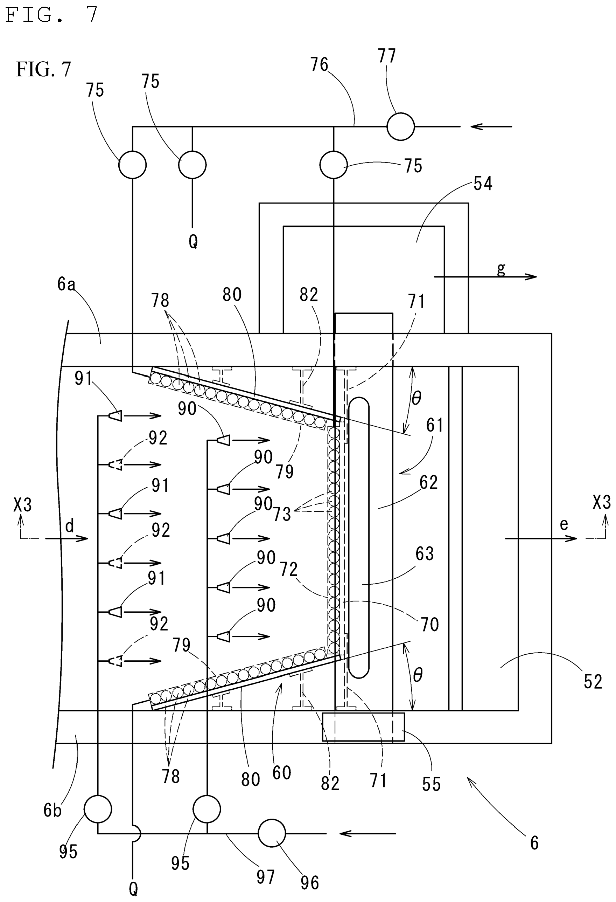

Fig. 7 shows a downstream-side portion of one primary sedimentation basin 6. Regarding sewage received into the primary sedimentation basin 6, settleable substances contained in the sewage settle to be separated while the sewage is moving from one side (the upstream side: the left side in an example in the drawing) of the primary sedimentation basin 6 to the other side (the downstream side: the right side in the example in the drawing), that is, while the sewage is flowing as represented by an arrow d in the drawing.

The settleable substances (sludge) that settle at a bottom surface of the primary sedimentation basin 6 are concentrated into a pit provided at a bottom portion on the one side of the primary sedimentation basin 6 via a sludge scraping machine (not shown) and then treated after being sent to a sludge treatment facility via a sludge discharge pipe 15 (refer to Fig. 1).

Raw water contains buoyant substances in addition to the settleable substances and the scum S, which is a collection of buoyant substances, is generated on the surface of water in a sedimentation basin 1. Therefore, in the primary sedimentation basin 6, the settleable substances as described above are separated and the scum S is removed by a second scum removal device 60.

Treated water obtained after removal of settleable substances and buoyant substances (the scum S) is received into an overflow trough 52 provided on the other side (the downstream side) of the primary sedimentation basin 6. The treated water received into the overflow trough 52 is extracted as represented by an arrow e in Fig. 7, sent to a reaction tank (an aeration tank) C, and subjected to a biological treatment.

The second scum removal device 60 is provided at a position upstream of the overflow trough 52 on a downstream side of flow of raw water in the primary sedimentation basin 6. In the second scum removal device 60, a pipe skimmer 61 (for the primary sedimentation basin) is provided to take scum in. The pipe skimmer 61 includes a pipe material 62 including a scum intake port 63 and a rotational movement mechanism 55 that rotationally moves the pipe material 62.

The pipe skimmer 61 is provided such that the pipe material 62 holds back flow of the surface of water. That is, the pipe material 62 is provided horizontally to cross the primary sedimentation basin 6 in a width direction (a direction intersecting flow), and a peripheral wall thereof is provided with a slit-shaped (slot-shaped) opening (the scum intake port 63) extending along a longitudinal direction. In addition, one end side of the pipe material 62 in the longitudinal direction watertightly penetrates one side wall 6a of the primary sedimentation basin 6 and is supported by the one side wall 6a to be rotationally movable and the other end side of the pipe material 62 is supported by the other side wall 6b of the primary sedimentation basin 6 to be rotationally movable. An end portion of the pipe material 62 penetrating the side wall 6a is disposed in a scum pit 54 provided outside the side wall 6a.

The rotational movement mechanism 55 configured to include a motor is provided on an upper surface of the other side wall 6b of the primary sedimentation basin 6 at which the other end side of the pipe material 62 is provided. The rotational movement mechanism 55 is configured such that the pipe material 62 can rotationally move in a reciprocating manner around the axis thereof by a predetermined angle.

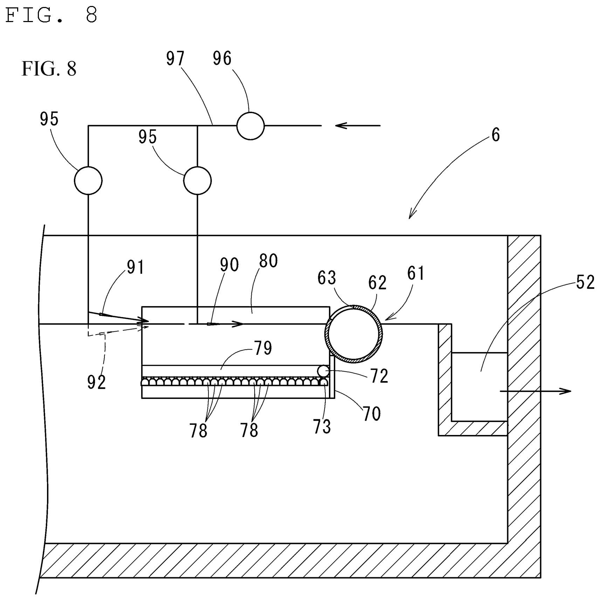

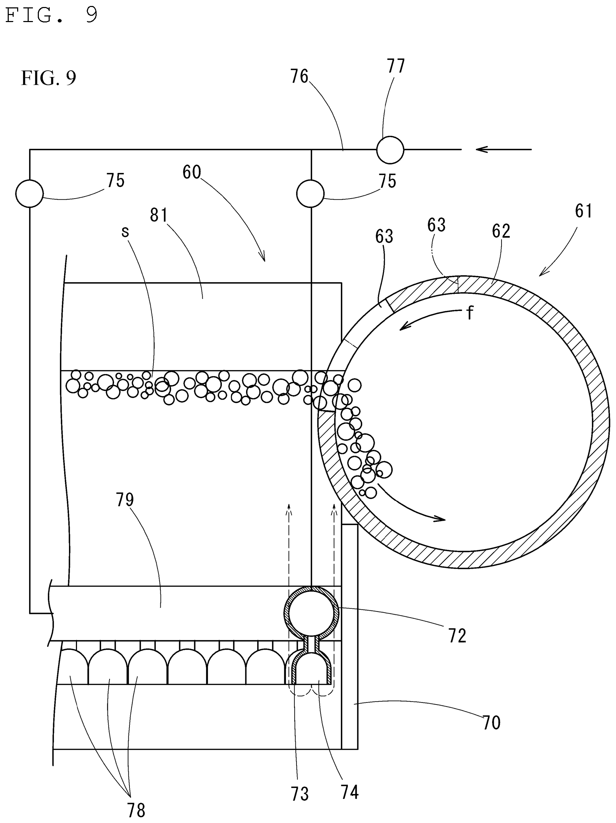

The pipe material 62 is supported such that the scum intake port 63 provided in the longitudinal direction is disposed to be normally positioned above the surface of water as shown in Figs. 7 and 8. In a case where a time for removal of scum is reached, the rotational movement mechanism 55 rotates as represented by an arrow f in Fig. 9 (in a counterclockwise direction in Fig. 9) and is rotationally moved such that the surface of water is positioned at the substantially center of the width (the width along a circumferential direction of the pipe material 62) of the scum intake port 63.

Accordingly, the scum S on the surface of water flows toward the scum intake port 63 from a front side of the pipe material 62 and after the scum S is dropped into the pipe material 62 through the scum intake port 63, the scum S is sent to the scum pit 54 through the inside of the pipe material 62. The position of the scum intake port 63 at this time will be referred to as a scum intake position and the position of the scum intake port 63 at which the scum intake port 63 is when the scum intake port 63 is disposed above the surface of water will be referred to as a nonintake position.

Note that the rotational movement mechanism 55 may have a structure in which the pipe material 62 is manually rotationally moved without a motor or the like.

The scum S discharged into the scum pit 54 is extracted from the scum pit 54 as represented by an arrow g (Fig. 7), and is sent to a scum treatment facility including a dehydrator or the like (not shown) to be treated. Water after the removal of the scum S is returned to the upstream side, is mixed with raw water, and is treated again.

In addition, when the removal of the scum is finished, the pipe material 62 is rotationally moved in a direction opposite to a direction along the arrow f (Fig. 9) (that is, in a clockwise direction in Figs. 8 and 9) so that the scum intake port 63 is disposed to be positioned above the surface of water as shown in Fig. 8 (refer to two-dot chain lines in Fig. 9 as well). Such rotational movement control of the rotational movement mechanism 55 is performed by a programmable controller (not shown) that controls the entire primary sedimentation basin 6 including the second scum removal device 60.

As shown in Fig. 7, the pipe material 62 is formed to have a length larger than the width of the primary sedimentation basin 6 and is disposed to cross a water flow direction of the primary sedimentation basin 6. The scum intake port 63 provided in the longitudinal direction thereof is formed to have a length smaller than the width of the primary sedimentation basin 6, and both ends of the scum intake port 63 in the longitudinal direction are separated from inner surfaces of both of the side walls 6a and 6b of the primary sedimentation basin 6 by predetermined distances.

The second scum removal device 60 includes the pipe skimmer 61, a front wall plate 70, and a pair of guide plates 80, the front wall plate 70 and the pair of guide plates 80 serving as a scum guide mechanism that concentrates the scum S in a direction toward the center in the width direction of the primary sedimentation basin 6. The front wall plate 70 and the guide plates 80 are provided on a side (the upstream side) ahead of the pipe material 62, that is, a side (a side that is to the left of the pipe material 62 in an example shown in the drawing) to which raw water flowing toward the pipe material 62 flows.

The front wall plate 70 is made of a steel plate material or a synthetic resin plate material, and has an elongated rectangular shape as seen in the direction in which raw water flows. The length of a long side of the rectangular shape of the front wall plate 70 is determined to be slightly larger than the length of the scum intake port 63, and the front wall plate 70 is disposed such that a short side of the rectangular shape is parallel to a depth direction of the primary sedimentation basin 6. As shown in Fig. 9, the position of an upper end of the front wall plate 70 is determined such that the position is lower than a position (a position at which a lower end portion of the scum intake port 63 is when the scum intake port 63 is at the scum intake position) at which the lower end portion of the scum intake port 63 is when the pipe material 62 is rotationally moved and a portion of the scum intake port 63 is in water. The position of a lower end of the front wall plate 70 extends to a position below the position of a lower portion of the pipe material 62.

One end portion of the front wall plate 70 in a longitudinal direction (a width direction of the sedimentation basin 1) is fixed to the inner surface of the one side wall 6a of the sedimentation basin 1 by means of a support member 71, and the other end portion is fixed to the inner surface of the other side wall 6b of the sedimentation basin 1 by means of another support member 71. When both end portions of the front wall plate 70 are to be fixed, both end portions are carefully attached such that a rear surface (a surface on the downstream side) of the front wall plate 70 (that is, a surface on a side opposite to a direction in which raw water flows) is brought close to the pipe material 62 to such a degree that the rear surface does not hinder rotational movement of the pipe material 62 and the position of an upper side of the front wall plate 70 is lower than the position of a lower end of the scum intake port 63 that is in a state of facing the upstream side. However, the upper side of the front wall plate 70 may be at the substantially same vertical position as the lower end of the scum intake port 63 of the pipe material 62 when the scum intake port 63 is at the scum intake position.

A fluid jetting pipe 72 extending in the width direction of the sedimentation basin 1 is provided near a lower side of the front wall plate 70 on a front side (the upstream side), that is, a lower side to which a direction in which raw water flows extends, by means of a U-bolt or the like. The fluid jetting pipe 72 is made of a steel pipe material or a synthetic resin pipe material, and a large number of discharge port members 73 are provided in a row at predetermined intervals in a length direction thereof.

Each of the discharge port members 73 is made of a synthetic resin such as fluororesin, and the outer shape thereof is a cup-like shape (a bowl-like shape, a hangingbell-like shape, or the like) with an opening portion 74 provided at a lower portion thereof. In addition, the discharge port members 73 are fixed to the fluid jetting pipe 72 in a state where the inner spaces thereof communicate with the inside of the fluid jetting pipe 72, and the opening portions 74 are disposed to face the vertically lower side.

One end side of the fluid jetting pipe 72 in a longitudinal direction is closed, and the other end side thereof is connected to a fluid supply pipe 76 via a flow rate adjustment valve 75. The fluid supply pipe 76 is provided with an opening and closing valve 77 such as a gate valve.

Although an example in which the front wall plate 70 is provided is shown in Figs. 7 to 9, the front wall plate 70 is not always necessary as a scum guide mechanism and the front wall plate 70 may not be provided. However, it is preferable that the front wall plate 70 is provided since provision of the front wall plate 70 results in a wall provided below the pipe skimmer 61.

Even in a case where the front wall plate 70 is not provided, it is preferable that the fluid jetting pipe 72 that includes the discharge port members 73 and that jets a pressure fluid is provided.

The paired guide plates 80 have the same shape as each other. The guide plates 80 are also made of a steel plate material or a synthetic resin plate material, similar to the front wall plate 70. In addition, the guide plates 80 have rectangular shapes, and the guide plates 80 are disposed in the sedimentation basin 1 such that short sides of the rectangular shapes are parallel to the depth direction. The guide plates 80 may not be provided.

The width (a dimension along the depth direction of the sedimentation basin 1) of a short side of each guide plate 80 is approximately two times the length (the width: a dimension along the depth direction of the sedimentation basin 1) of a short side of the front wall plate 70. The positions of upper sides and lower sides of both of the guide plates 80 are determined such that the positions of the upper sides are higher than the position of an upper surface of the scum S and the positions of the lower sides are substantially equal to the position of a lower side of the front wall plate 70 when the guide plates 80 are installed in the sedimentation basin 1 (refer to Figs. 8 and 9).

Fluid jetting pipes 79 including a plurality of discharge port members 78 are attached near lower sides of the guide plates 80 that are on a front side (the upstream side), by means of U-bolts or the like. The fluid jetting pipes 79 provided for both of the guide plates 80 are connected to the fluid supply pipe 76 via flow rate control valves 75, as with the fluid jetting pipe 72 of the front wall plate 70.

For the sake of convenience of illustration, the fluid jetting pipe 79 on the side wall 6b side is shown up to an intermediate portion thereof and is connected to a pipe shown in an upper portion of the drawing at a position represented by a reference symbol "Q" in Fig. 7.

Although specific dimensions (dimensions of long sides) of the guide plates 80 in longitudinal directions will be described later, both of the guide plates 80 are fixed by means of support members 82 such that end portions of the guide plates 80, each of which is on one side in each of the longitudinal directions, respectively abut end portions (end portions on upper and lower sides in Fig. 7) of the front wall plate 70 and end portions of both of the guide plates 80, each of which is on the other side in each of the longitudinal directions, respectively abut the inner surfaces of the side walls 6a and 6b of the sedimentation basin 1. At the time of such fixation, attachment is carefully performed such that the positions of the upper sides are higher than the position of the upper surface of the scum S and the positions of the lower sides are substantially equal to the position of the lower side of the front wall plate 70.

The length of each of the paired guide plates 80 is determined depending on an attachment angle θ at which the guide plates 80 are attached to the inner surfaces of both of the side walls 6a and 6b of the primary sedimentation basin 6. In an example of Fig. 7, the paired guide plates 80 are attached to the inner surfaces of both of the side walls 6a and 6b at an angle of approximately 15° and are disposed such that an interval between the paired guide plates 80 gradually increases toward the upstream side.

The purpose of attaching the paired guide plates 80 at the attachment angle θ is to increase the concentration of the scum S and to obtain the scum S with a low water content by gradually concentrating, to a center portion side of flow, the scum S flowing toward the guide plates 80. It is also conceivable to decrease the lengths (dimensions along the width direction of the primary sedimentation basin 6) of the scum intake port 63 provided in the pipe material 62 and the front wall plate 70 to achieve such an increase in concentration. However, in a case where the attachment angle θ is large, the guide plates 80 increase the resistance against flow of the scum S. Therefore, the installation angle θ is appropriately determined depending on the properties of raw water to be received into the sedimentation basin 1, the amount of the scum S generated, and the like.

Note that since the pair of guide plates 80 is provided with the fluid jetting pipes 79 and water ejection nozzles 90 and 91 which will be described later, the installation angle θ of the guide plates 80 can be made somewhat large.

In a case where the attachment angle θ of the pair of guide plates 80 is made close to 0°, the pair of guide plates 80 is made almost parallel to both of the side walls 6a and 6b of the primary sedimentation basin 6 and the effect of the guide plates 80 on concentrating the scum S is made smaller. However, since the resistance against the scum S is reduced, the movement speed of the scum S is increased and since the pair of guide plates 80 is provided with the fluid jetting pipes 79 and the water ejection nozzles 90 and 91 which will be described later, a time taken for the scum S to be discharged is shortened and thus the amount of water for the discharge can be made small.

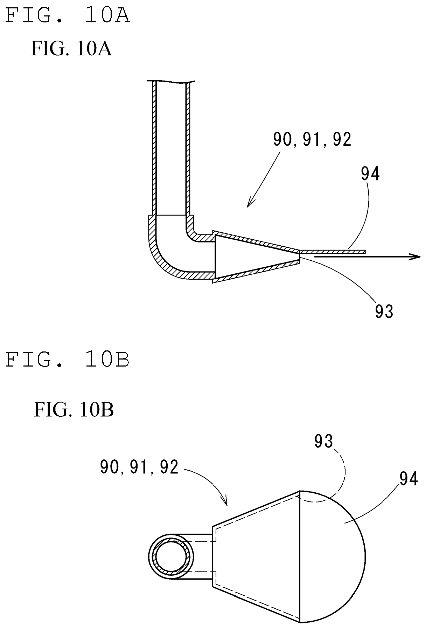

Near the surface of water in the vicinity of the second scum removal device 60 configured to include the front wall plate 70 and the pair of guide plates 80 as described above, the water ejection nozzles (above-water nozzles) 90 and 91 (for the primary sedimentation basin) shown in Figs. 10A and 10B are provided above the water and water ejection nozzles (in-water nozzle) 92 (for the primary sedimentation basin) are provided in the water. Among these, as shown in Fig. 7, a plurality of (five in the example shown in the drawing) the water ejection nozzles 90 are provided at predetermined intervals in a direction (a direction intersecting flow) across the sedimentation basin 1 in a region between the paired guide plates 80 and as with the water ejection nozzles 90, a plurality of (six in total in the example shown in the drawing) the water ejection nozzles 91 and 92 are provided slightly upstream of the installation positions of the water ejection nozzles 90 (in the example shown in the drawing, outside the region between the paired guide plates 80).

Each of the ejection nozzles 90, 91, and 92 is configured to include a slit 93 through which water is jetted in a direction substantially parallel to a water surface direction and a rectification piece 94 that is provided to protrude from an upper portion of the slit 93 and that holds a layer-shaped water stream jetted from the slit 93. The ejection nozzles 90 (above-water nozzles) disposed in the region between both of the guide plates 80 are provided at the substantially same position as the surface of water and are installed such that layer-shaped water streams jetted from the slits 93 thereof proceed toward the second scum removal device 60 side (the pipe skimmer 61 side).

Three above-water nozzles 91 that are positioned slightly above the surface of water and three in-water nozzles 92 that are positioned slightly below the surface of water are alternately disposed upstream of the region between both of the guide plates 80. The above-water nozzles 91 are provided to be slightly inclined downward and sprinkle water toward the surface of water from an obliquely upper side. The in-water nozzles 92 are provided to be slightly inclined upward and eject water toward the surface of water from the inside of water. Note that in Figs. 7 and 8, the above-water nozzles 90 and 91 are represented by solid lines, and the in-water nozzles 92 are represented by broken lines.

The water ejection nozzles 90, 91, and 92 are configured such that the amount of ejection can be appropriately adjusted by means of flow rate adjustment valves 95 and the water ejection nozzles 90, 91, and 92 are connected to a water supply pipe 97 including an opening and closing valve 96.

Of solid substances floating as scum, a solid substance that settles in a case where there is no air bubble adhering thereto can be caused to settle and to be separated by sprinking water from above the scum S with the water ejection nozzles 91 and ejecting water from the inside of water with the water ejection nozzles 92 so as to destroy air bubbles. Therefore, the number and the arrangement of the above-water nozzles 91 and the in-water nozzles 92 are determined depending on the properties or the like of the scum S on the surface of water.

An operation of removing the scum S in the primary sedimentation basin 6 including the second scum removal device 60 configured as described above is performed as follows.

It will be assumed that there is a certain amount of the scum S retained on the surface of water and a time for scum discharge has been reached as shown in Fig. 9. When such a time is reached, the pipe skimmer 61 rotationally moves such that the state thereof is changed from a state as shown in Figs. 7 and 8 to a state as shown in Fig. 9.

The opening and closing valves 77 and 96 are opened at the same time as the rotational movement of the pipe skimmer 61 or before the rotational movement. Water is ejected to the scum layer S from the water ejection nozzles 90, 91, and 92 provided at upstream-side positions, so that air bubbles adhering to a solid substance of the scum layer S are destroyed, the solid substance floating due to the air bubbles settles and is separated, flow of the surface of water is accelerated due to the water ejected toward the downstream side, and the scum is pushed to flow to the downstream side.

Then, the scum layer S is pushed to flow toward the scum intake port 63 of the pipe skimmer 61 through a space between the guide plates 80. At this time, at surfaces of the guide plates 80, compression air is jetted from the discharge port members 78 of the fluid jetting pipes 79 as pressure fluids and a bubbling stream thereof reaches the surface of water. Therefore, the scum layer S flows in a state of being separated from the surfaces of the guide plates 80 and being drawn to a central side and is guided to the scum intake port 63 without adhering to the guide plates 80.

At a front surface of the front wall plate 70, compression air is relatively gently jetted from the fluid jetting pipe 72 and a buoyant force thereof causes the scum S to flow to the scum intake port 63 while being lifted. In this manner, the scum S is caused to be taken into the scum intake port 63 and thereafter, the scum S continuously flows into the pipe material 62 of the pipe skimmer 61 again and again. Once inflow of the scum S starts, air stops being jetted from the fluid jetting pipe 72 of the front wall plate 70.

Since the jetting of compression air from the fluid jetting pipes 79 of the guide plates 80 prevents adhesion of the scum S to the guide plates 80 and prompts smooth flow to the scum intake port 63 by separating the scum S from the surfaces of the guide plates 80, the jetting of the compression air is continuously performed even after the scum S starts to be taken in.

Meanwhile, water streams jetted from the water ejection nozzles 90 disposed in the region between the guide plates 80 prompts flow of the scum S and thus the scum S can be quickly discharged toward the pipe material 62 side of the pipe skimmer 61.

The scum S taken into the pipe skimmer 61 is discharged to the scum pit 54 and is sent to the scum treatment facility to be treated.

When most of the scum S is discharged into the pipe skimmer 61, the pipe skimmer 61 (the pipe material 62) is rotationally moved to enter a state of being at the nonintake position shown in Figs. 7 and 8 and the opening and closing valves 77 and 96 are closed. Accordingly, compression air from the fluid jetting pipes 72 and 79 is stopped and ejection of water from the water ejection nozzles 90, 91, and 92 is stopped. Accordingly, a series of scum removal operations of the second scum removal device 60 is finished.

Regarding the second scum removal device 60 configured as described above, since the pipe material 62 of the pipe skimmer 61 is disposed to block a flow path on the surface of water and the second scum removal device 60 is configured to include the front wall plate 70 including the fluid jetting pipe 72, the pair of guide plates 80, and the water ejection nozzles 90, 91, and 92, it is possible to remove scum by operating the second scum removal device 60 for approximately 7 to 10 minutes once a week, for example.

Therefore, it is possible to discharge scum in a shorter time and thus an extremely excellent effect in which the amount of water to be caused to flow into the pipe skimmer 61 along with the scum is reduced and the amount of power consumption required to remove scum and to return the water to raw water can be significantly reduced. In addition, although treated water is released into the natural environment, the load on the environment is reduced since the water quality of the treated water is improved. Therefore, the second scum removal device 60 configured as described above has an excellent feature in which it is possible to contribute to reduction of the load on the natural environment and to further contribute to energy saving.

Furthermore, the second scum removal device 60 configured as described above has a feature in which the front wall plate 70 and the pair of guide plates 80 including the fluid jetting pipes 72 and 79, which are main components, can be manufactured in advance at a factory and thus the second scum removal device 60 can be easily applied to an existing sedimentation basin as well.

### (Reaction Tank C)

The reaction tank C is a place where treated water of the primary sedimentation basin group B is biologically treated and the treated water is treated through a high-level treatment process such as a standard activated sludge process, an anaerobic-anoxic-aerobic process (A2O process), or an anaerobic-aerobic activated sludge process (AO process) (refer to Fig. 1). The reaction tank C is a treatment facility that is the core of the sewage treatment plant since the treated water of the primary sedimentation basin group B is received into the reaction tank C and returned sludge from the final sedimentation basin group E is received into the reaction tank C to be biologically treated as necessary. However, since removal of scum is not performed in the reaction tank C, no further description of the reaction tank C will be provided.

### (Final Sedimentation Basin Conduit D)

The final sedimentation basin conduit D is configured to receive treated water from the reaction tank C and to distribute and supply the treated water to each of final sedimentation basins 100 of the final sedimentation basin group E as raw water (refer to Fig. 1). Into the final sedimentation basin conduit D, a scum removal device similar to the first scum removal device 35 (refer to Fig. 1) incorporated into the primary sedimentation basin conduit A as described above with reference to Figs. 2 to 4 is incorporated. Since the configuration thereof is almost the same as that of the first scum removal device 35, no further description thereof will be provided.

In the scum removal device in the final sedimentation basin conduit D, the above-water nozzles 11 shown in Figs. 2 to 4 may be omitted. It is a matter of course that the above-water nozzles 11 are provided as necessary depending on the properties of scum.

### (Final Sedimentation Basin Group E)

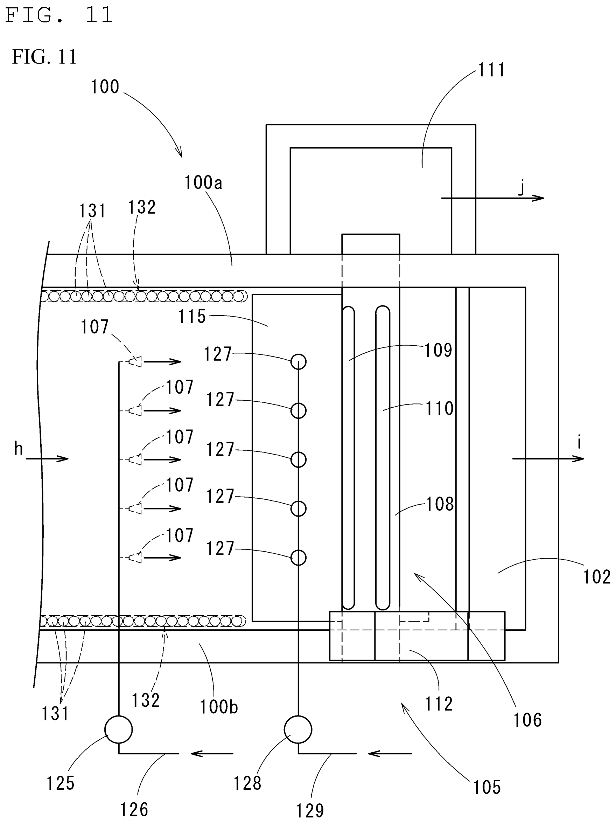

Fig. 11 is a plan view of a downstream-side portion of one final sedimentation basin 100 of the final sedimentation basin group E and hereinafter, the description will be made by using the one final sedimentation basin 100 since the configurations of the final sedimentation basins 100 for the primary sedimentation basin group E are the same as each other.

In the final sedimentation basin 100, as with a well-known sedimentation basin, settleable substances contained in raw water (treated water of the reaction tank C) received into the final sedimentation basin 100 settle and are separated while the raw water is moving from one side of the final sedimentation basin 100 to the other side (from the left side to the right side in Fig. 11 as represented by an arrow h). Although not shown, settleable substances (sludge) that settle at a bottom surface of the final sedimentation basin 100 are concentrated into a pit provided at a bottom portion on the one side of the final sedimentation basin 100 via a sludge scraping machine and then used after being sent to the reaction tank C as returned sludge via a sludge discharge pipe 101 (refer to Fig. 1), and remaining sludge is treated after being sent to a sludge treatment facility as surplus sludge.

In addition, treated water of the final sedimentation basin 100 from which a settleable substance has been separated and scum has been removed by a third scum removal device 105, which will be described in detail later, is received into an overflow trough 102 provided on the other side of the final sedimentation basin 100. The treated water received into the overflow trough 102 is extracted as represented by an arrow i in Fig. 11 and is released after being disinfected.

The third scum removal device 105 provided in the final sedimentation basin 100 is configured to include a pipe skimmer 106 for a final sedimentation basin and water ejection nozzles 107.

The pipe skimmer 106 includes a pipe material 108 made of steel or synthetic resin and a rotational movement mechanism 112 that rotationally moves the pipe material 108. The pipe material 108 includes two openings (scum intake ports) 109 and 110 extending in a longitudinal direction, and is provided to hold back flow of the surface of raw water in the final sedimentation basin 100. That is, one end side of the pipe material 108 in the longitudinal direction watertightly penetrates one side wall 100a (a side wall on the upper side in Fig. 11) of the final sedimentation basin 100 and is provided to be rotationally movable and the other end side of the pipe material 108 is provided at the other side wall 100b of the final sedimentation basin 100 to be rotationally movable.

An end portion of the pipe material 108 penetrating the side wall 100a is disposed in a scum pit 111 provided outside the side wall 100a. Therefore, scum in the pipe material 108 can be discharged into the scum pit 111. The scum discharged into the scum pit 111 is extracted as represented by an arrow j and is sent to a scum treatment facility (not shown) to be treated.

The openings (an upstream-side scum intake port 109 and a downstream-side scum intake port 110) of the pipe material 108 are formed to be parallel to each other at an interval in a circumferential direction of the pipe material 108. The positions of both ends of each of the openings 109 and 110 are close to the side walls 100a and 100b of the final sedimentation basin 100. The length of each of the openings 109 and 110 is almost equal to the width of the final sedimentation basin 100.

The rotational movement mechanism 112 configured to include a motor is provided on an upper surface of the other side wall 100b of the final sedimentation basin 100. The rotational movement mechanism 112 is configured to be able to rotationally move the pipe material 108 within a predetermined rotational movement angle in a reciprocating manner by vertically driving a driving rod 114 connected to an arm 113 that is provided to protrude at one end portion of the pipe material 108. Note that the rotational movement mechanism 112 may have a structure in which the pipe material 108 is manually rotationally moved in a reciprocating manner without a motor or the like.

A scum guide plate (a guide plate) 115 is provided on one side wall of the pipe material 108. The scum guide plate 115 is a plate-shaped guide plate that is made of steel or a synthetic resin and that has a rectangular planar shape, and the scum guide plate 115 is provided to extend toward the upstream side (the left side in an example shown in the drawing) by a predetermined distance from the position of a lower side at which the one opening 109 (an opening disposed on the upstream side in the final sedimentation basin 100: the upstream-side scum intake port) of the pipe skimmer 106 is formed.

That is, one end side (a right side in the drawing) of the scum guide plate 115, which corresponds to a base portion, is bonded to a lower side of the opening 109 and the scum guide plate 115 extends to be inclined with respect to a radial direction of the pipe material 108. The guide plate 115 is formed to be curved such that the other end side thereof (that is, a distal end portion 115a of the scum guide plate 115) protrudes at an upper surface.

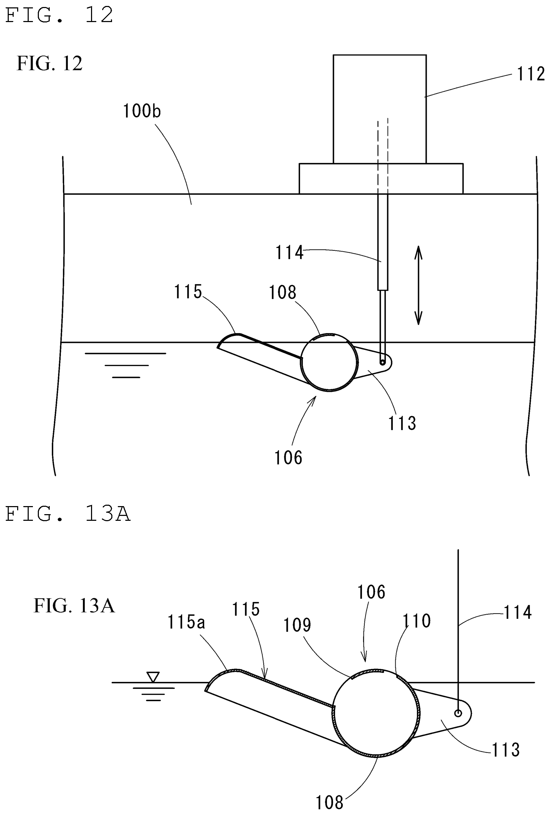

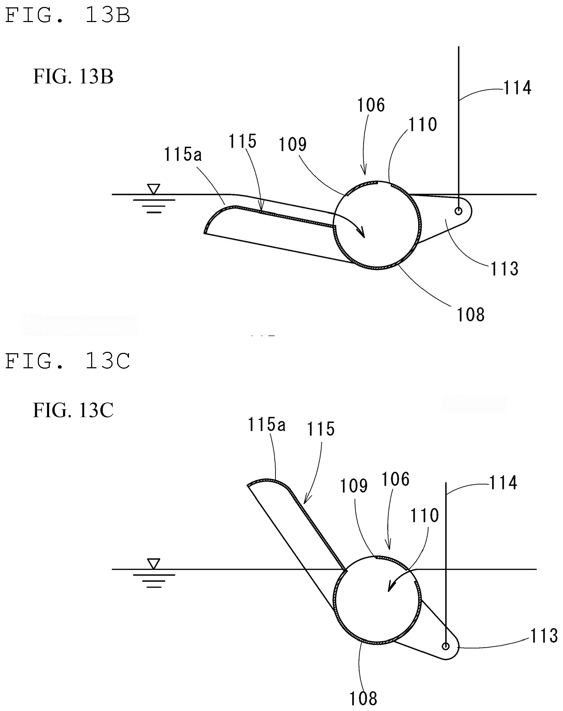

Due to such a shape, when the distal end portion 115a of the scum guide plate 115 protrudes to a position above the surface of water (Fig. 13A), flow of the scum S is held back by the scum guide plate 115. When the distal end portion 115a of the scum guide plate 115 is disposed in water (Fig. 13B), a surface (an upper surface) of the scum guide plate 115 is disposed to slope down to the opening 109 from the upstream side and thus the scum S flowing from the upstream side can be taken into the opening 109 while flowing on the surface of the scum guide plate 115 that slopes down.

As shown in Fig. 13A, the opening (the downstream-side scum intake port) 110 is disposed downstream of the opening 109 to be parallel with the opening 109 in a state where the opening 109 is disposed on the surface of water. A positional relationship in which the opening 110 is disposed above the surface of water when the distal end portion of the scum guide plate 115 inhibits entry of the scum S as described above (Fig. 13A) and when scum is taken into the opening 109 on the upstream side (Fig. 13B) is set. In addition, a lower end edge of the opening 110 faces the downstream side and is disposed below the surface of water when the pipe material 108 is rotationally moved in a direction (a clockwise direction in Figs. 13A to 13C) opposite to a direction in which the pipe material 108 is rotationally moved when scum is to be taken in on the upstream side.

Therefore, when the pipe material 108 in a state as shown in Fig. 13A is rotationally moved in a counterclockwise direction, the distal end portion 115a of the scum guide plate 115 is disposed in water as shown in Fig. 13B and the scum S is guided into the opening 109 along the surface (the upper surface) of the scum guide plate 115. When the pipe material 108 in the state as shown in Fig. 13A is rotationally moved in the clockwise direction, the opening 110 is partially disposed in water as shown in Fig. 13C, so that scum floating at a position downstream of the pipe material 108 becomes able to be taken into the opening 110. In a state shown in Fig. 13C, the scum guide plate 115 on the upstream side greatly protrudes to a position above the surface of water.

Rotational movement of the pipe material 108 that is caused by the rotation mechanism 112 is controlled by a programmable controller (not shown) that controls the entire final sedimentation basin 100 including the third scum removal device 105.

The water ejection nozzles 107 are disposed in water and jet pressure water toward the surface of water, on which the scum S floats, from the inside of water to create a water stream with respect to the scum floating on the surface from the inside of water and to push the scum to flow to the downstream side. Each of the water ejection nozzles 107 includes a flat tubular distal end portion 121 of which the width is larger than the height thereof and a valve body 123 that is provided in the tubular distal end portion 121 and that can open and close an opening 122 of the tubular distal end portion 121.

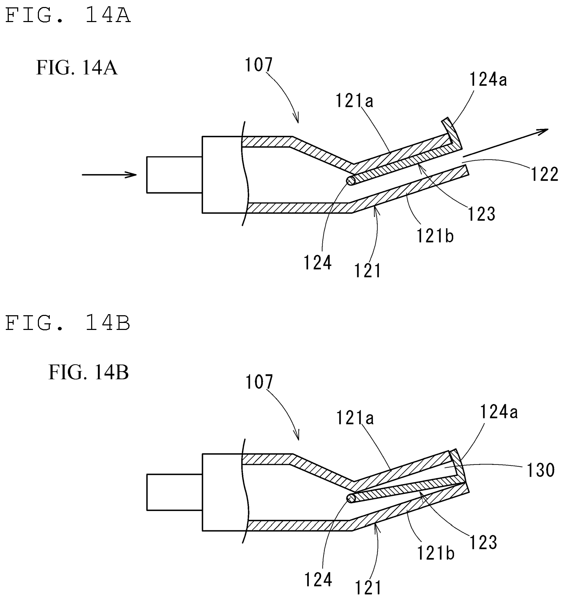

A base end portion of the valve body 123 is supported by a shaft 124 in the tubular distal end portion 121 to be rotationally movable and the valve body 123 vertically rotationally moves between a position at which the valve body 123 abuts a lower surface of an upper wall 121a of the tubular distal end portion 121 such that the opening 122 is formed between a lower surface of the valve body 123 and a lower wall 121b of the tubular distal end portion 121 as shown in Fig. 14A and a position at which the valve body 123 abuts an upper surface of the lower wall 121b of the tubular distal end portion 121 such that the opening 122 is closed as shown in Fig. 14B.

The valve body 123 has a weight that causes the valve body 123 to rotationally move downward due to the weight thereof and to close the opening 122 when there is no supply of pressure water and that causes the valve body 123 to rotationally move upward due to the pressure of pressure water and to open the opening 122 when there is supply of pressure water. In addition, a distal end of the valve body 123 is integrally formed with an upright plate 124a that closes a gap 130 formed between an upper surface of the valve body 123 and the upper wall 121a of the tubular distal end portion 121 in a state where the opening 122 is closed as shown in Fig. 14B.

Since the upright plate 124a is provided and a space (the gap 130) above the valve body 123 is closed by the upright plate 124a in a state where the opening 122 is closed as shown in Fig. 14B, entry of scum or the like that causes clogging can be prevented and the valve body 123 can be operated smoothly.

A plurality of (five in an example shown in the drawing) the water ejection nozzles 107 are provided in water to be close to the surface of water at positions on the upstream side that are separated from the position of a distal end of the scum guide plate 115 by a predetermined distance and are provided at predetermined intervals in a direction orthogonal to flow in the final sedimentation basin 100. A water supply pipe 126 that includes a flow rate adjustment valve 125 provided at an intermediate position thereof is connected to each of the water ejection nozzles 107 so that pressure water is supplied to each of the water ejection nozzles 107.

The direction of ejection of pressure water from each of the water ejection nozzles 107 is determined such that the pressure water is ejected toward the pipe material 108 (from the upstream side to the downstream side). Therefore, when the pressure water is ejected from each of the water ejection nozzles 107, the flow velocity of surface water in the final sedimentation basin 100 is increased and the scum S floating on the surface of surface water can be sent to the pipe material 108.

Note that the amount of generation of scum in the final sedimentation basin group E is small since most of the scum S is removed in the primary sedimentation basin conduit A, the primary sedimentation basin group B, and the final sedimentation basin conduit D as already described. Therefore, a state where scum adheres to a wall surface as in the primary sedimentation basin conduit A and pieces of scum stick together is less likely to occur and scum is in a state of floating on the surface of water after being dispersed.

Therefore, the amount of water ejection (ejection pressure) from the water ejection nozzles 107 is set to be smaller than the amount of water ejection (ejection pressure) of the in-water nozzles 13 and 92 and the like provided in the primary sedimentation basin conduit A, the primary sedimentation basin group B, the final sedimentation basin conduit D, and the like and is set such that the scum S does not make treated water muddy and is not dissolved into the treated water by being destroyed or scattered due to water ejection.

Note that in Fig. 11, as with the conduit A and the like, fluid jetting pipes 132 including discharge port members 131 are provided inside the side walls 100a and 100b and compression air is jetted from the inside of water such that scum near the side walls 100a and 100b can be drawn to the center. However, the fluid jetting pipes 132 may be omitted in a case where the amount of scum is small or the like.

In addition, a plurality of sprinkling nozzles 127 that eject water toward the scum guide plate 115 are provided at positions above the scum guide plate 115. The sprinkling nozzles 127 are well-known cleaning sprinkling nozzles that can peel off a contaminant lightly adhering to an object and that can cause the contaminant to flow out, and the sprinkling nozzles 127 are connected to a water supply pipe 129 that includes a flow rate regulation valve 128 provided at an intermediate position thereof.

Next, a scum removal operation in the third scum removal device 105 configured as described above will be described.

During a sedimentation treatment in the final sedimentation basin 100, the openings 109 and 110 of the pipe skimmer 106 are positioned on the surface of water as shown in Fig. 13A. At a position upstream of the opening 109, the distal end portion 115a of the scum guide plate 115 protrudes to a position above the surface of water so that the scum S is held back. The scum S is generated in a thin film-like shape on the surface of water at a position closer to the upstream side than the scum guide plate 115 is.

When the area of the scum S generated becomes somewhat large, the pipe material 108 of the pipe skimmer 106 is rotationally moved by the rotational movement mechanism 112. Accordingly, the scum guide plate 115 is submerged as shown in Fig. 13B, the opening 109 on the upstream side is partially positioned in water, and pressure water is ejected from each of the water ejection nozzles 107.

The pressure water ejected from each of the water ejection nozzles 107 is ejected toward the opening 109 of the pipe material 108 and water ejection from the water ejection nozzles 107 accelerates flow of raw water, of which the flow velocity is low due to the final sedimentation basin 100, only at the surface thereof so that scum floating on the surface of water is efficiently sent to the opening 109 of the pipe material 108.

In this case, since the amount of water ejected from the water ejection nozzles 107 is small and the water is relatively gently ejected from the water ejection nozzles 107, the scum S moves along with flow in a state of floating on the surface of water or in a state of maintaining a thin film-like shape, is taken into the pipe material 108 through the opening 109, and is discharged to the scum pit 111.

At this time, since the scum guide plate 115 is disposed upstream of the pipe material 108 to be close to the surface of water, it is possible to efficiently guide scum to the opening 109 without being influenced by an upward stream or the like from a lower side. Therefore, in the case of the pipe skimmer 106, it is possible to remove scum only by operating the pipe skimmer 106 for a short time of approximately 5 to 7 minutes once a day, for example. The scum S discharged to the scum pit 111 is sent to the scum treatment facility to be treated.

Note that treated water after removal of the scum S is caused to flow to the overflow trough 102 at a position downstream of the pipe skimmer 106, is extracted from the overflow trough 102 as represented by an arrow i in Fig. 11, and is released after being disinfected.

Although most of the scum S is taken into the opening 109 of the pipe material 108 in this manner, a small amount of the scum S may flow to a position downstream of the pipe material 108. Therefore, the pipe material 108 in a state as shown in Fig. 13A is rotationally moved in the direction opposite to the direction in which the pipe material 108 is rotationally moved when the scum S is to be taken in on the upstream side, so that a portion of the opening 110 disposed on the downstream side is disposed below the surface of water as shown in Fig. 13C. Accordingly, it is possible to cause the scum S floating on the surface of water to flow into the opening 110 and to be discharged to the scum pit 111.

After the removal of the scum S is finished, the rotational movement position of the pipe material 108 is returned to a state shown in Fig. 13A, and water starts to be sprinkled from the sprinkling nozzles 127 as necessary so that the surface of the scum guide plate 115 is cleaned. The water used to clean the guide plate 115 flows into the pipe material 108 through the opening 109. Since the surface of the scum guide plate 115 is cleaned by the water sprinkled from the sprinkling nozzles 127, it is possible to effectively prevent the scum S from sticking to the scum guide plate 115 or the like and hindering the next scum removal.

In the case of the third scum removal device 105 in the final sedimentation basin group E configured as described above, it is possible to capture the scum S, which is generated although the amount thereof is small, at the pipe skimmer 106 in a state where the scum S floats on the surface of water or in a state where the scum S maintains a thin film-like shape while causing the scum S to flow relatively gently and preventing the scum S from making treated water muddy.

Therefore, it is possible to achieve an excellent effect in which it is possible to prevent deterioration of the quality of treated water to be discharged, it is possible to reduce the amount of water for discharge of the scum S, and it is possible to achieve energy saving. That is, the third scum removal device 105 configured as described above has a property that can greatly contribute to so-called environmental preservation. Moreover, since the scum guide plate 115 with a curved distal end portion is provided, the floating scum S can be caused to flow to the opening 109 efficiently and the amount of water flowing into the pipe skimmer 106 is reduced from this viewpoint as well. In addition, since the upper surface of the scum guide plate 115 is cleaned by water sprinkled from the sprinkling nozzles 127, it is possible to prevent the next scum removal from being hindered.

In the scum removal system in the sewage treatment plant configured as described above, scum removal is efficiently performed by the first scum removal device 35 incorporated into the primary sedimentation basin conduit A, the second scum removal devices 60 incorporated into the primary sedimentation basin group B, a scum removal device (having the same configuration as the scum removal device 35) incorporated into the final sedimentation basin conduit D, and the third scum removal devices 105 incorporated into the final sedimentation basin group E and thus the efficiency of the scum removal in the entire sewage treatment plant can be increased.

Therefore, it is possible to improve the quality of treated water, to reduce the load on the natural environment, to remove scum with a pipe skimmer in a short time, and to reduce the amount of returned water for the removal of scum. Therefore, there is an effect in which energy saving is achieved and thus the cost of scum treatment in the sewage treatment plant can be significantly reduced.

Although the scum removal system of the sewage treatment plant according to the present invention has been described with reference to the drawings, the specific configuration is not limited to the above-described embodiment, and design changes and the like can be made without departing from the scope of the present invention.

For example, in the above-described embodiment, the discharge port members 73 are provided at the fluid jetting pipes 72 and 79. However, a structure may be adopted in which the discharge port members 73 are not provided and small holes are formed in the fluid jetting pipes. However, in a case where the discharge port members 73 are provided, the amount of compression air can be increased. In addition, although the fluid jetted from the fluid jetting pipes 72 and 79 is compression air, the same effect can be achieved even in a case where the fluid is a water stream or pressure water containing air bubbles.

### Industrial Applicability

It is possible to efficiently perform scum removal by using scum removal devices that are incorporated into a primary sedimentation basin conduit, a primary sedimentation basin, a final sedimentation basin conduit, and a final sedimentation basin in accordance with the respective situations thereof. Accordingly, it is possible to improve the quality of treated water and thus it is possible to reduce a load on the environment in a case where the treated water is released into the natural environment. In addition, since the amount of water flowing into a pipe skimmer along with scum is small and it is possible to perform scum removal in a short time, the amount of water returned to an upstream side from the pipe skimmer is reduced and as a result, the amount of electricity for returning the water can be reduced, energy saving can be achieved, and the cost of scum treatment in a sewage treatment plant can be reduced.

### Reference Signs List

A: primary sedimentation basin conduit
B: primary sedimentation basin group
C: reaction tank
D: final sedimentation basin conduit
E: final sedimentation basin group
2: conduit body
3: scum bit
4: movable gate
6: sedimentation basin (primary sedimentation basin)
7: inflow port
8: opening and closing gate
9: pipe
11: water ejection nozzle (above-water nozzle) (for conduit)
13: water ejection nozzle (in-water nozzle) (for conduit)
20: scum peeling device
21: discharge port member
22: opening portion
23: pressure fluid supply portion
24: pressure fluid pipe
35: first scum removal device
52: overflow trough
54: scum pit
60: second scum removal device
61 pipe skimmer (for primary sedimentation basin)
62: pipe material
63: scum intake port
70: front wall plate
72: fluid jetting pipe
73: discharge port member
74: opening portion
78: discharge port member
79: fluid jetting pipe
80: guide plate
90, 91: water ejection nozzle (above-water nozzle) (for primary sedimentation basin)
92: water ejection nozzle (in-water nozzle) (for primary sedimentation basin)
100: sedimentation basin (final sedimentation basin)
102: overflow trough
105: third scum removal device
106: pipe skimmer (for final sedimentation basin)
107: water ejection nozzle (for final sedimentation basin)
108: pipe material
109: opening (upstream-side scum intake port)
110: opening (downstream-side scum intake port)
111: scum pit
112: rotational movement mechanism
115: scum guide plate (guide plate)
123: valve body
124a: upright plate
127: sprinkling nozzle

## Claims

1. A scum removal system in a sewage treatment plant in which scum is removed from raw water that is treated via a primary sedimentation basin conduit, a primary sedimentation basin group, a reaction tank, a final sedimentation basin conduit, and a final sedimentation basin group, the system comprising:
first scum removal devices that are provided in the primary sedimentation basin conduit and the final sedimentation basin conduit;
second scum removal devices that are respectively provided in primary sedimentation basins of the primary sedimentation basin group; and
third scum removal devices that are respectively provided in final sedimentation basins of the final sedimentation basin group,
wherein each of the first scum removal devices includes
a scum peeling device including a pair of pipes that extends along a direction in which the raw water flows inside both side walls of a conduit body in which the raw water flows, that includes a plurality of opening portions provided at intervals in a length direction, and that is provided to be positioned below the scum and a pressure fluid supply portion through which a pressure fluid from a pressure fluid supply source is supplied to the pipes, and
a water ejection nozzle for a conduit that moves the scum toward a scum pit provided at a terminal end of the conduit body,
each of the second scum removal devices includes
a pipe skimmer for a primary sedimentation basin that collects the scum,
a scum guide mechanism that concentrates the scum in a direction toward a center in a width direction of the primary sedimentation basin, and
a water ejection nozzle for the primary sedimentation basin that moves the scum toward the pipe skimmer for the primary sedimentation basin,
each of the third scum removal devices includes
a pipe skimmer for a final sedimentation basin that collects the scum, and
a water ejection nozzle for the final sedimentation basin that moves the scum toward the pipe skimmer for the final sedimentation basin, and
an amount of water ejection of the water ejection nozzle for the final sedimentation basin is set to be smaller than an amount of water ejection of the water ejection nozzle for the conduit.

2. The scum removal system in a sewage treatment plant according to Claim 1,
wherein the pipe skimmer for the final sedimentation basin includes a scum guide plate that is disposed below a surface of water ahead of an opening into which the scum is to be received and that guides the scum while causing the scum to flow.

3. The scum removal system in a sewage treatment plant according to Claim 1,
wherein the scum guide mechanism includes
a front wall plate that is disposed below an opening of the pipe skimmer for the primary sedimentation basin into which the scum is to be received,
a pair of guide plates that is disposed such that an interval between the guide plates increases from both end portions of the front wall plate toward an upstream side from which the raw water flows, and
a fluid jetting pipe that jets a pressure fluid that rises from lower end portions of the front wall plate and the guide plates along surfaces of the front wall plate and the guide plates that are on a side from which the raw water flows is provided near the front wall plate and the guide plates.

4. The scum removal system in a sewage treatment plant according to Claim 1,
wherein the pipe skimmer for the final sedimentation basin includes
a pipe material that is disposed along a width direction of the final sedimentation basin, and
a rotational movement mechanism that rotationally moves the pipe material around an axis,
the pipe material includes an upstream-side scum intake port formed on an upstream side and a downstream-side scum intake port formed on a downstream side, the intake ports being formed at an interval in a circumferential direction, and
the rotational movement mechanism rotationally moves the pipe material in one direction so that the upstream-side scum intake port is disposed on a surface of water and rotationally moves the pipe material in a direction opposite to the one direction so that the downstream-side scum intake port is disposed on the surface of water.

5. The scum removal system in a sewage treatment plant according to Claim 1,
wherein a plurality of the pressure fluid supply portions are provided and are respectively connected to a plurality of portions of the pipes.
